# EUROPEAN PATENT APPLICATION

(11) **EP 1 081 717 A1**
(43) Date of publication of application: **07.03.2001**
(21) Application number: 99917196.0
(22) Date of filing: 27.04.1999
(51) Int. Cl.: G21F 9/12, C02F 1/28, B01J 20/26

(54) **METHOD FOR TREATING RADIOACTIVE WASTE**

(30) Priority: 28.04.1998 JP 11871498; 06.04.1999 JP 9845599
(71) Applicant: CHISSO CORPORATION, Tokyo 100-8333 (JP)
(72) Inventor: MATSUMOTO, Ken, Saitama 346-0016 (JP); KATO, Hideo, Kitasoma-gun, Ibaraki 300-1504 (JP); TODOKORO, Masami, Kumamoto 867-0062 (JP); HATA, Hideyuki, Kumamoto 867-0011 (JP)
(74) Representative: HOFFMANN - EITLE
(86) International application number: JP9902255
(87) International publication number: WO9956287

(57) **Abstract**

Provided is a method for treating a radioactive waste in which a radioactive isotope-containing waste liquid can easily be treated at a low cost to facilitate storage control or rejection control thereof and which can reduce a load onto facilities such as a storage tank in a medical institution. The method comprises bringing a radioactive isotope-containing waste liquid into contact with a soluble or easily decomposable adsorbent for selectively adsorbing radioactive isotopes to adsorb the radioactive isotopes on the above adsorbent and then dissolving or decomposing this adsorbent.

## Description

### Technical Field

The present invention relates to a method for treating a radioactive isotope-containing waste liquid, more specifically to a method for treating a radioactive isotope-containing waste which can separate, store and reject a radioactive isotope in the form of a liquid waste of a small volume and which can reduce a load onto a facility of a medical institution.

### Background Art

In an irradiation therapy or a radiodiagnosis, administered to patients are radioactive drugs containing radioactive isotopes such as 123I, 131I, 125I, 85Sr, 89Sr, 90Sr, 87Y, 90Y, 91Y, 153Sm, 145Sm, 182Re, 184Re, 186Re and 99mTc.

Used are, for example, sodium iodide (123I) and sodium iodide (131I) for diagnosis (thyroid function check, scintigram and the like) of thyroid diseases and therapy thereof (Basedow's disease, thyroid cancer and the like), iodized sodium hyprate (123I), iodized sodium hyprate (131I) and methyl norcholesterol iodide(131I) for renal and urinary disease diagnosis such as adrenal scintigram, and sodium iodide (131I) and hydrochloric acid N-isopropyl-p-iodoamphetamine (131I) for determining a blood volume.

Further, strontium chloride(89Sr) is used as a radioactive drug effective for a pain with which cancerous metastasis is accompanied, and technetium is used for labeling various drugs and used primarily as a drug for circulatory diseases.

Radioactive drugs thus administered are excreted outside the body within 2 days by 80 % at maximum in the case of sodium iodide (131I) (Nagasaki Medical Society Magazine, vol. 46, p. 71 to 81, 1971). In the case of strontium chloride (89Sr), a great portion thereof is excreted into urine by fourth day after administration (Nuclear Medicine, vol. 32, p. 311 to 321, 1995). Accordingly, it is required in medical institutions that patients to which radioactive drugs are administered are received in an RI administrative hospital ward and the excretes of the patients are treated as radioactive wastes in a sewage disposal tank and introduced into a storage tank and that the radiation dosage is reduced to a lower level than a standard of 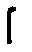 concentration limit of radioactive isotopes related to sewage 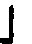 provided in a radiation injury prevention law.

Accordingly, a medical institution has to install a large scale of a storage tank to store and control the excretes for a long period of time or dilute them with a large amount of water to a lower level than a discharge standard concentration. Such restriction as described above is put on utilization of radiation in medical service, and therefore because of a limited treating capacity of radioactive isotopes in a medical institution, diagnosis and therapy which have to be originally executed according to necessity can not help being executed according to a plan based on the treating capacity, and even such troubles that treatments according to necessity can not be made are brought about.

Further, when patients return home after administering radioactive drugs, the radioactive isotopes are not recovered and controlled at home after excretion and have been subjected to general sewage treatment because of a low concentration thereof.

Known as a method for separating radioactive isotopes from a liquid radioactive waste are a coprecipitation method (precipitation method), a solution remaining method, a chromatograph method, a solvent extraction method, a sublimation-distillation method, an electrochemical separation method, a radiocolloid method, an isotope exchange method, a hot atom method and a jet method.

Among these methods, the coprecipitation method (precipitation method), the chromatograph method and a combined method of both methods are given, to roughly divide, as the method for separating radioactive isotopes, and included is, for example, a method using the precipitation method in combination with the chromatograph method, in which an inorganic metal salt such as silver nitrate, ferric chloride and ferric nitrate is added to radioactive iodine-containing urine to form a precipitate and then it is adsorbed and removed by means of activated carbon (Japanese Patent Application Laid-Open No. 54799/1975).

Also, included as well are a method in which non-radioactive iodine is added to a radioactive iodine-containing waste liquid to raise an iodine concentration and then a precipitant such as silver nitrate is added to precipitate and remove iodine (Japanese Patent Application Laid-Open No. 297190/1993) and a method in which metallic aluminum and silica gel are added to an alkaline waste liquid containing radioactive iodine to solidify it (Japanese Patent Application Laid-Open No. 119499/1985).

In the conventional precipitation methods described above, however, an addition amount of a precipitant has to be increased in order to elevate a removal efficiency of the radioactive isotopes, and because of metal contained in the precipitant, a disposal problem of a metal waste liquid is brought about in addition to a storing problem of the precipitate as a radioactive solid waste. Further, in the chromatograph method, activated carbon or an ion exchanger is usually used, but in both cases, a problem on storage of the absorbent as a radioactive solid waste still remains unsolved.

A method for improving the existing state that a restriction put on such disposal of the radioactive wastes as described above can not help delaying diagnosis and therapy includes an expansion in the storage tank or a scale up in the treating capacity by installing such treating apparatus as described in Japanese Patent Application Laid-Open No. 297190/1993. Because of regal regulations, however, facilities for using radioactive substances and treating facilities for radioactive wastes have specific structures and therefore require a lot of plant and equipment investment.

### Disclosure of the Invention

An object of the present invention is to provide a method for treating a radioactive waste which can easily treat a radioactive isotope-containing waste liquid at a low cost to facilitate storage control or rejection control thereof and which can reduce a load onto facilities such as a storage tank in a medical institution.

Under such circumstances, intensive researches repeated by the present inventors have resulted in leading to the idea that if radioactive isotopes contained in a waste liquid can be adsorbed and removed and then the absorbent can be disposed by decomposition or dissolution, handling becomes easy, and researches further repeated by them have resulted in finding that an absorbent comprising a soluble or easily decomposable high polymer as a carrier is suited to such absorbent, and thus they have completed the present invention.

That is, the present invention provides a method for treating a radioactive waste, comprising bringing a radioactive isotope-containing waste liquid into contact with a soluble or easily decomposable adsorbent for selectively adsorbing radioactive isotopes to adsorb the radioactive isotopes on the above adsorbent and then dissolving or decomposing this adsorbent, and the above method comprises the following structures 1) to 7).
1) A method for treating a radioactive waste, comprising bringing a radioactive isotope-containing waste liquid into contact with a soluble or easily decomposable adsorbent for selectively adsorbing radioactive isotopes to adsorb the radioactive isotopes on the above adsorbent and then dissolving or decomposing this adsorbent.
2) The treating method as described in the above item 1), wherein the radioactive isotopes are elements selected from radioactive iodine, strontium, yttrium, rhenium, samarium and technetium.
3) The treating method as described in the above item 1) or 2), wherein the soluble or easily decomposable adsorbent for selectively adsorbing radioactive isotopes is prepared by bonding a substance which selectively adsorbs the above elements, an ion-exchange group or a chelating group to a soluble or easily decomposable high molecular compound.
4) The treating method as described in the above item 3), wherein the ion-exchange group is at least one selected from a tertiary amino group, a quaternary ammonium group, a sulfonyl group and a carboxyl group.
5) The treating method as described in the above item 3), wherein the chelating group is a group which has at least one atom selected from oxygen, nitrogen and sulfur in a molecule and which can coordinate with a metal ion.
6) The treating method as described in the above item 3), wherein the chelating group is a group which has at least one selected from aminopolycarboxylic acid, aminopolyphosphonic acid, a porphyrin skeleton, a phthalocyanine skeleton, cyclic ether, cyclic amine, phenol and a lysine derivative and which can coordinate with a metal ion.
7) The treating method as described in any of the above items 1) to 6), wherein the soluble or easily decomposable high molecular compound is polysaccharide.

### Best Mode for Carrying Out the Invention

The radioactive isotope which is the subject in the present invention shall not be restricted as long as it can be used as a radioactive drug and includes iodine, strontium, yttrium, rhenium, samarium and technetium. To be specific, included are 123I, 131I, 125I, 85Sr, 89Sr, 90Sr, 87Y, 90Y, 91Y, 153Sm, 145Sm, 182Re, 184Re, 186Re and 99mTc.

Accordingly, compounds containing the radioactive isotopes described above are contained in the radioactive isotope-containing waste liquid in the present invention.

The adsorption in the present invention includes both of physical adsorption and chemical adsorption, and to be specific, included are adsorption by virtue of a van der Waals force, adsorption by virtue of a hydrogen bond, adsorption by virtue of a π-π interaction, adsorption by virtue of an ion bond and adsorption by virtue of a coordinate bond.

The adsorbent for selectively adsorbing radioactive isotopes which is used in the present invention includes those prepared by bonding a substance which can selectively adsorb the above elements or a functional group to a soluble or easily decomposable carrier.

This soluble or easily decomposable carrier shall not specifically be restricted as long as it is soluble in organic solvents or water or easily decomposable by an acid, an alkali or an enzyme but is preferably a high molecular compound, particularly a high molecular compound having a molecular sieve effect. Further, particularly preferred as the above carrier in terms of handling are porous spherical particles comprising as a principal raw material, polysaccharide such as cellulose, chitosan, agarose and dextran.

When cellulose is used as a raw material for the carrier, capable of being suitably utilized are cellulose spherical particles obtained by a method going through acetic acid esters described in Japanese Patent Publication No. 39565/1980 and Japanese Patent Publication No. 40618/1985, a method for granulating from a solution using calcium thiocyanate described in Japanese Patent Publication No. 62252/1988, a method for producing from a paraformaldehyde·dimethyl sulfoxide solution described in Japanese Patent Publication No. 22093/1990 and a method for producing by coagulating and neutralizing a viscose dispersion with an acid described in Japanese Patent Publication No. 76496/1993.

The substance or functional group which can be bonded to these soluble or easily decomposable carriers includes a substance which selectively adsorbs the above elements, an ion-exchange group or a chelating group. In this case, the substance which selectively adsorbs the elements described above includes starch (selective to iodine).

The ion-exchange group includes at least one selected from a tertiary amino group, a quaternary ammonium group, a sulfonyl group and a carboxyl group.

The chelating group includes a group which has at least one atom selected from oxygen, nitrogen and sulfur in a molecule and which can coordinate with a metal ion, and to be specific, it includes groups which have at least one selected from aminopolycarboxylic acid, aminopolyphosphonic acid, a porphyrin skeleton, a phthalocyanine skeleton, cyclic ether, cyclic amine, phenol and a lysine derivative and which can coordinate with a metal ion.

Among them, the ion-exchange group such as a tertiary amino group or a quaternary ammonium group is preferably used for iodine, rhenium, technetium or samarium. Also, the ion-exchange groups such as a sulfonyl group or a carboxyl group or the chelating group is preferably used for strontium, yttrium or samarium.

The preceding selective adsorbent used in the present invention can be prepared by bonding the substance which selectively adsorbs the elements described above, the ion-exchange group or the chelating group to the soluble or easily decomposable carrier described above.

The preceding element selective adsorbent thus obtained has a selective adsorbing capacity against the above elements as well in an aqueous solution containing proteins (not much more than 500 mg/day) such as urine, electrolytes (Cl: 16 to 56 mEg/l, Na: 40 to 156 mEq/l) or salts (not much more than 500 mM).

The adsorbent adsorbing the radioactive isotopes can dissociate the radioactive isotopes by changing the salt concentration or the pH or can be dissolved or decomposed by an organic solvent, an acid aqueous solution, an alkaline aqueous solution or an enzyme solution. This makes it possible not only to reduce the volume of the radioactive isotopes contained in the radioactive isotope-containing waste liquid but also to make the concentration lower than a discharge standard concentration of isotopes emitting a radiation by diluting with water after a decrease in the radioactivity and reject it. Accordingly, it does not have to be stored in a large volume in a large scale of a storage tank, and an amount of water required for dilution can be reduced to a large extent.

Specific examples of a method for bringing the radioactive isotope-containing waste liquid into contact with the soluble or easily decomposable adsorbent for selectively adsorbing radioactive isotopes include a method in which the above adsorbent is filled into a column and the above waste liquid is passed through the column and a method in which the above adsorbent is dipped in the above waste liquid and after operation such as stirring, the adsorbent is recovered.

In the present invention, the above contact method shall not specifically be restricted, but the method in which the adsorbent is filled into a column is preferred in the medical care field. In such case, the size and the form of the column have to be optionally selected according to use purposes.

A dissolving agent or a decomposing agent for the adsorbent shall not specifically be restricted, and any ones can be used as long as they can dissolve or decompose materials used for the adsorbent. The decomposing agent which can be used for decomposing polysaccharide includes, for example, conc. sulfuric acid and a sodium hydroxide aqueous solution in addition to enzymes such as Endo-1,4-β-glucanase, Endo-1,3-β-D-glucanase, Exo-cellobiohydrolase and β-glucosidase. Among them, the enzymes are preferably used.

The adsorbent is treated using one or several kinds of these enxymes, for example, in a buffer solution of pH 4.0 to 6.0 in a concentration of 2 to 50 mg/ml at a temperature of 37 to 50°C for several hours to 3 weeks, whereby the adsorbent can be decomposed. In this case, dissolution of the adsorbent can be accelerated by mixing by means of a magnetic stirrer, a circulating pump or a stirring blade. Further, the adsorbent can more effectively be dissolved if the adsorbent is mechanically broken by means of an equipment such as a homogenizer and a crusher.

The method of the present invention can be applied not only to the excretes of patients or animals to which radioactive isotopes are administered but also to a waste liquid of radioimmunoassay in which a radioactive isotope is used as a tracer. Storage control or rejection control of a radioactive waste can be facilitated, and a load onto the storage tank can be reduced.

Next, the present invention can be explained in further details with reference to examples and comparative examples, but the present invention shall not be restricted to them.

### Production Example 1 (production of an anion adsorbent)

Cellufine A-200 (manufactured by Chisso Corporation) which was a cellulose spherical particle was used as a porous spherical particle which was a base for an adsorbing carrier.

Cellufine A-200 of 128 g was put into 220 ml of a sodium hydroxide aqueous solution of 5 % by weight to which 0.12 g of a surfactant (Cation M2-100, manufactured by Nippon Oil & Fat Co., Ltd.) and swollen by stirring at 30°C for 2 hours. Then, the temperature was elevated, and when it reached 40°C, 127 g of glycidyltrimethylammonium chloride was put thereinto to carry out the reaction at 80°C for 3 hours, followed by washing with water and neutralizing to obtain an adsorbent having an anion-exchange capacity.

### Example 1

### (1) Adsorption of radioactive iodine on the adsorbent

A column having a minor diameter of 1 cm was charged with 5 g of the anion adsorbent obtained in Production Example 1 with a phosphoric acid buffer solution (pH 7.0), and human urine to which 111 MBq of sodium iodide (131I) was added was applied as a sample to the column. The solution passing through the column was fractioned by 1 ml to determine 131I contained in the solution, whereby it was confirmed that 131I was adsorbed on the adsorbent.

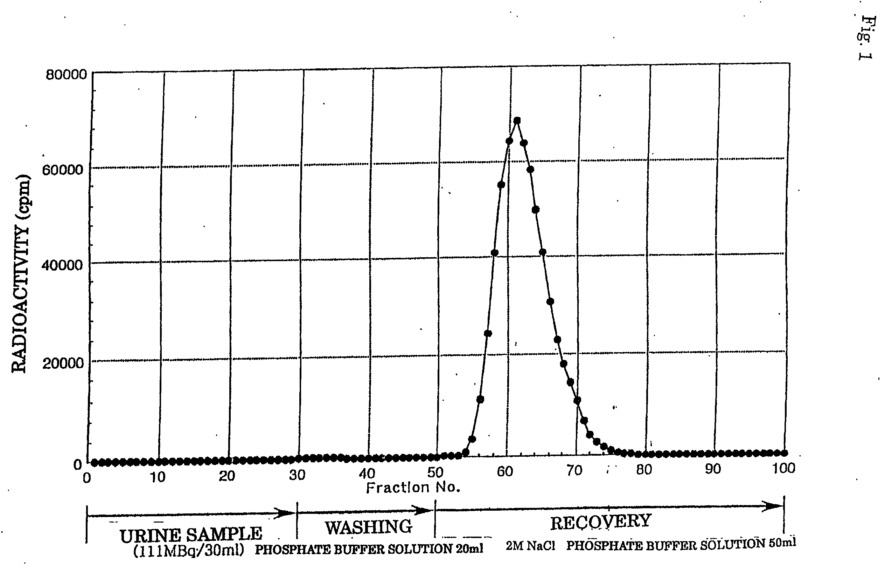

As shown in the results in Fig. 1, it was confirmed that 5 g of the anion adsorbent obtained in Production Example 1 had an adsorbing capacity of sodium iodide 111 MBq. Adsorbed 131I can be recovered by using a 2M NaCl/phosphoric acid buffer solution.

### (2) Dissolution of anion adsorbent

Two kinds of cellulase [Aspergillus niger origin (manufactured by Nagase Sangyo Co., Ltd.) and Trichodermaviride origin (manufactured by Wako Pure Chemicals Ind. Co., Ltd.)] were suspended in a concentration of 2 to 50 mg/ml in a 0.1M acetic acid buffer solution (pH 5.0) to obtain an enzyme solution. Suspended in 4 ml of this enzyme solution was 2 g of the adsorbent on which radioactive iodine was adsorbed in (1), and the suspension was put in a constant temperature vessel to observe the state of the adsorbent under a microscope with the passage of time.

As a result thereof, it was confirmed that the adsorbent was dissolved depending on the enzyme concentration, and in the group of 2 mg/ml which was the lowest enzyme concentration, it was not before 5 days were spent that the adsorbent particles were not completely observed.

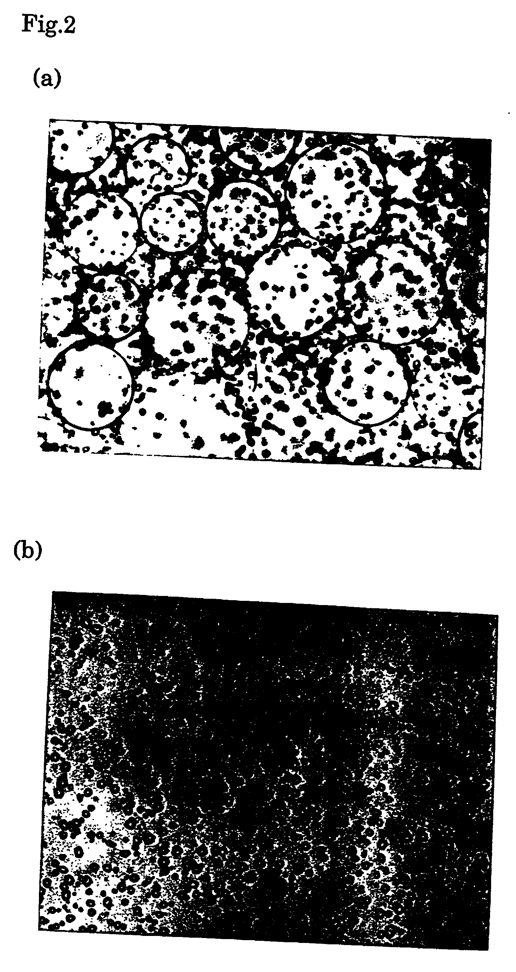

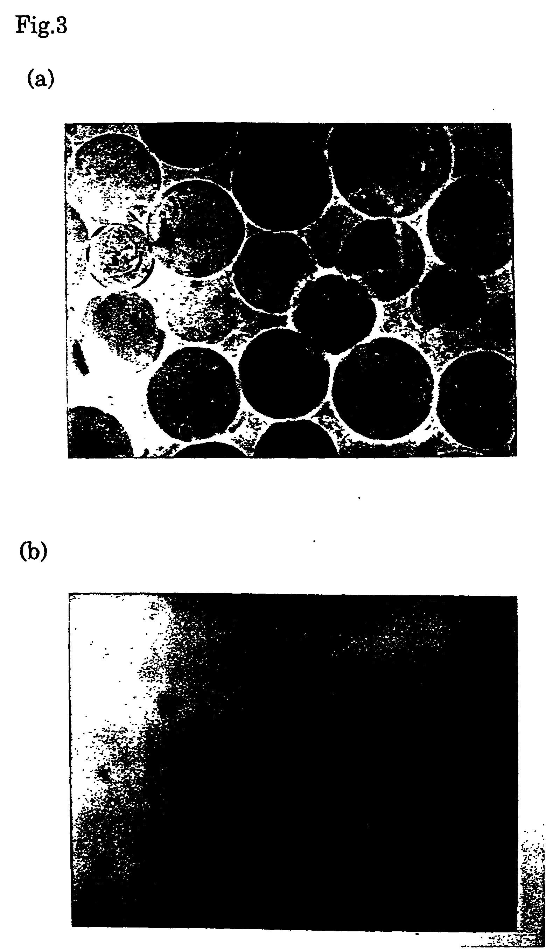

Microphotographs (100 magnifications) taken immediately after suspended in the enzyme solution (a) and 5 days after (b) are shown in Fig. 2 and 3. Shown are the case using cellulase manufactured by Nagase Sangyo Co., Ltd. in Fig. 2 and the case using cellulase manufactured by Wako Pure Chemicals Ind. Co., Ltd. in Fig. 3.

### Production Example 2

### (1) Production of an anion adsorbent

Cellufine GH-25 (manufactured by Chisso Corporation) which was a cellulose spherical particle was used as a porous spherical particle which was a base for an adsorbing carrier.

Added to 100 g of GH-25 was 0.15 g of the surfactant (same as in Production Example 1), and the mixture was put into a NaOH aqueous solution of 3 % by weight and swollen by stirring at 30°C for 2 hours. Then, the temperature was elevated, and 90 g of GTA (glycidyltrimethylammonium chloride) was put thereinto at 40°C to carry out the reaction at 80°C for 3 hours, followed by washing with water and neutralizing to obtain an adsorbent.

The adsorbent thus obtained had an excluded critical molecular weight of 2,500 with PEG (polyethylene glycol).

### (2) Production of a cation adsorbent

Cellufine GH-25 (manufactured by Chisso Corporation) which was a cellulose spherical particle was used as a porous spherical particle which was a base for an adsorbing carrier.

Added to 100 g of GH-25 was 0.15 g of the surfactant (same as in Production Example 1), and the mixture was put into a NaOH aqueous solution of 5 % by weight and swollen by stirring at 30°C for 2 hours. Then, the temperature was elevated, and 120 g of 1,3-propanesultone was put thereinto at 60°C to carry out the reaction at 80°C for 3 hours, followed by washing with water and neutralizing to obtain an adsorbent.

The adsorbent thus obtained had an excluded critical molecular weight of 3,000 with PEG (polyethylene glycol).

### (3) Production of a divalent chelate adsorbent

CPC (manufactured by Chisso Corporation) which was a cellulose spherical particle was used as a porous spherical particle which was a base for an adsorbing carrier.

CPC 100 g was put into a NaOH aqueous solution of 10 % by weight and swollen by stirring at 30°C for one hour. Then, 20 g of epichlorohydrin was put thereinto to carry out the reaction at 30°C for 2 hours, followed by washing with water and neutralizing to obtain a gel. The resulting gel was mixed with a solution prepared by dissolving 30 g of iminodiacetic acid in 120 ml of pure water to carry out the reaction at 80°C for 4 hours, followed by washing with water arid neutralizing to obtain an adsorbent.

### (4) Production of a trivalent chelate adsorbent

CPC (manufactured by Chisso Corporation) which was a cellulose spherical particle was used as a porous spherical particle which was a base for an adsorbing carrier.

CPC 100 g was put into a NaOH aqueous solution of 10 % by weight and swollen by stirring at 30°C for one hour. Then, 20 g of epichlorohydrin was put thereinto to carry out the reaction at 30°C for 2 hours, followed by washing with water to obtain a gel. Added to the resulting gel was 120 ml of a 25 % ammonia aqueous solution to carry out the reaction at 40°C for one hour. The gel washed with water and neutralized after the reaction was suspended in an aqueous solution prepared by dissolving 20 g of sodium acetate in 120 ml of pure water, and 30 g of anhydrous diethylenetriamine-N,N,N',N',N'-pentaacetic acid was added thereto at 10°C in one hour. After finishing addition, the solution was further stirred for one hour, followed by neutralizing and washing with water to obtain an adsorbent.

### Example 2

The anion adsorbent 1 g (wet weight) obtained in Production Example 2 was put into a solution prepared by dissolving 10 mg of cellulase (manufactured by Wako Pure Chemicals md. Co., Ltd.) in 2 ml of an acetic acid buffer of 0.1M and pH 4.5 and shaken by means of a shaker of 37°C. After 24 hours, the solution was filtered, and the weight of the remaining adsorbent was measured. As a result thereof, the adsorbent was dissolved by 85 % by weight. Further, the cation adsorbent 1 g (wet weight) was subjected to the same dissolution test as in the anion adsorbent, and as a result thereof, the adsorbent was dissolved by 90 % by weight. Also, the divalent chelate adsorbent and the trivalent chelate adsorbent were subjected to the same dissolution test, and as a result thereof, the respective adsorbents were dissolved by 95 % by weight.

### Industrial Applicability

The method of the present invention can facilitate storage control or rejection control of a radioactive isotope-containing waste liquid and can reduce a load onto facilities such as a storage tank in a medical institution and a research institution. Further, the recovered radioactive isotopes can be decreased in a volume, whereby the radioactive isotopes can sufficiently be decayed, and radioactivity discharged to the environment can be reduced in an amount.

## Claims

1. A method for treating a radioactive waste, comprising bringing a radioactive isotope-containing waste liquid into contact with a soluble or easily decomposable adsorbent for selectively adsorbing radioactive isotopes to adsorb the radioactive isotopes on said adsorbent and then dissolving or decomposing this adsorbent.

2. The treating method as described in claim 1, wherein the radioactive isotopes are elements selected from radioactive iodine, strontium, yttrium, rhenium, samarium and technetium.

3. The treating method as described in claim 1 or 2, wherein the soluble or easily decomposable adsorbent for selectively adsorbing radioactive isotopes is prepared by bonding a substance which selectively adsorbs said elements, an ion-exchange group or a chelating group to a soluble or easily decomposable high molecular compound.

4. The treating method as described in claim 3, wherein the ion-exchange group is at least one selected from a tertiary amino group, a quaternary ammonium group, a sulfonyl group and a carboxyl group.

5. The treating method as described in claim 3, wherein the chelating group is a group which has at least one atom selected from oxygen, nitrogen and sulfur in a molecule and which can coordinate with a metal ion.

6. The treating method as described in claim 3, wherein the chelating group is a group which has at least one selected from aminopolycarboxylic acid, aminopolyphosphonic acid, a porphyrin skeleton, a phthalocyanine skeleton, cyclic ether, cyclic amine, phenol and a lysine derivative and which can coordinate with a metal ion.

7. The treating method as described in any of claims 1 to 6, wherein the soluble or easily decomposable high molecular compound is polysaccharide.
